# DEMANDE DE BREVET EUROPEEN

(11) **EP 4 049 870 A1**
(43) Date de publication de la demande: **31.08.2022**
(21) Numéro de dépôt: 22157868.5
(22) Date de dépôt: 22.02.2022
(51) Int. Cl.: B60J 7/06

(54) **BENNE ÉQUIPÉE D'UN DISPOSITIF DE BÂCHAGE**

(30) Priorité: 24.02.2021 FR 2101806
(71) Demandeur: GM Innovation, 85510 Le Boupère (FR)
(72) Inventeur: MENARD, Guy, 85510 LE BOUPÈRE (FR)
(74) Mandataire: Cabinet Chaillot

(57) **Abrégé**

La présente invention porte sur une benne de transport de marchandises, de forme parallélépipédique ouverte à sa partie supérieure, comportant un fond à quatre parois latérales, à savoir deux paroi latérales longitudinales si l'on considère le sens d'avance d'un camion sur lequel la benne serait placée, et deux parois latérales transversales, l'une des parois longitudinales étant apte à basculer autour de sa ligne de liaison avec le fond, pour un déversement latéral, ladite benne comportant un dispositif de bâchage (18) apte à recouvrir et à découvrir son ouverture supérieure, ledit dispositif de bâchage (18) comportant une bâche souple appliquée sur un support de bâche apte à prendre les positions de recouvrement et de découvrement en entraînant avec lui ladite bâche, caractérisée par le fait que le support de bâche comporte un châssis à ciseaux (19) relié à une extrémité à une bordure transversale supérieure de la benne et à l'autre extrémité à un chariot de poussée (22) monté déplaçable sur la benne en étant guidé sur la bordure longitudinale supérieure de la benne opposée à la paroi longitudinale basculante.

## Description

La présente invention porte sur une benne équipée d'un dispositif de bâchage.

Une benne présente généralement une forme parallélépipédique présentant un fond et des parois latérales perpendiculaires deux à deux. Les bennes peuvent être ouvertes à leur partie supérieure et nécessitent alors un système de bâchage pour protéger le contenu de la benne.

Classiquement, une benne s'ouvre par sa paroi arrière en position d'avancée normale de la benne, mais peut également s'ouvrir par l'une des parois longitudinales, aussi appelées ridelles. Dans ce cas, la ridelle longitudinale peut basculer vers l'extérieur afin d'ouvrir la benne. Dans un tel cas où la benne peut s'ouvrir à la fois sur sa paroi arrière et sur l'une de ses ridelles longitudinales, on parle de bi-benne.

On connaît par le document-brevet FR 3 027 568 un dispositif de déplacement de bâche pour une bi-benne qui comporte une barre d'entraînement de bâche ainsi qu'un rail de guidage mobile et un rail de guidage fixe. Le rail de guidage fixe est solidaire de la ridelle fixe alors que le rail de guidage mobile est solidaire de la ridelle basculante.

La barre d'entraînement de bâche permet d'entraîner une bâche entre une position où elle découvre entièrement l'ouverture supérieure de la benne et une position dans laquelle elle recouvre entièrement l'ouverture supérieure de la benne.

La bâche est supportée par une pluralité de tringles ayant la forme d'arceaux. Des éléments coulissants sont fixés aux tringles et présentent une forme complémentaire au rail de guidage mobile, ce qui permet de guider la bâche vers sa position déployée.

Cependant, une telle configuration ne permet pas de pouvoir ouvrir la ridelle longitudinale avec la bâche en position fermée.

On connaît par le document FR 2 902 379, un dispositif de déplacement de bâche pour une bi-benne avec lequel il est possible d'ouvrir la ridelle longitudinale tout en ayant la bâche dans sa position déployée recouvrant l'ouverture supérieure de la bi-benne.

Dans ce dispositif, la bâche n'est pas guidée du côté de la ridelle basculante. Cette absence de guidage de la bâche du côté de la ridelle basculante et l'utilisation de barres en forme d'arceau fait que l'essentiel de la masse du dispositif est supporté par le rail de guidage porté par la ridelle opposée à la ridelle basculante. Ceci pose des problèmes de tenue mécanique du dispositif.

La Société demanderesse a donc recherché une solution à ces problèmes afin d'obtenir un système de bâchage permettant d'ouvrir la ridelle basculante d'une bi-benne avec la bâche en position déployée recouvrant l'ouverture supérieure de la benne tout en présentant une bonne tenue mécanique du système.

La Société demanderesse a donc mis au point une benne équipée d'un système de bâchage avec un guidage dissymétrique, le guidage de la bâche étant assuré sur le côté de la ridelle basculante par une roulette roulant sur la bordure supérieure de la ridelle et la bâche étant supportée par une pluralité de ciseaux, ce qui permet de ne pas faire peser la masse du système uniquement sur le rail de guidage porté par la ridelle longitudinale opposée à la ridelle basculante.

A cet effet, la présente invention porte sur une benne de transport de marchandises, de forme parallélépipédique ouverte à sa partie supérieure, comportant un fond à quatre parois latérales, à savoir deux paroi latérales longitudinales si l'on considère le sens d'avance d'un camion sur lequel la benne serait placée, et deux parois latérales transversales, l'une des parois longitudinales étant apte à basculer autour de sa ligne de liaison avec le fond, pour un déversement latéral, ladite benne comportant un dispositif de bâchage apte à recouvrir et à découvrir son ouverture supérieure, ledit dispositif de bâchage comportant une bâche souple appliquée sur un support de bâche apte à prendre les positions de recouvrement et de découvrement en entraînant avec lui ladite bâche, caractérisée par le fait que le support de bâche comporte un châssis à ciseaux relié à une extrémité à une bordure transversale supérieure de la benne et à l'autre extrémité à un chariot de poussée monté déplaçable sur la benne en étant guidé sur la bordure longitudinale supérieure de la benne opposée à la paroi longitudinale basculante.

Le châssis à ciseaux peut comporter une succession de parallélogrammes articulés entre eux en un point central et se prolonge à chaque extrémité par les deux branches d'un demi-parallélogramme.

Dans un mode de réalisation particulier, les branches des parallélogrammes du châssis à ciseaux peuvent être disposées dans un même plan.

Dans un autre mode de réalisation particulier, les points centraux d'articulation du châssis à ciseaux peuvent être surélevés par rapport aux points d'articulation latéraux, donnant au bâchage une forme générale en dôme. Le chariot de poussée peut alors présenter une forme en V inversé pour correspondre à la forme en dôme de la bâche.

Les branches du demi-parallélogramme tournées vers la bordure transversale supérieure de la benne peuvent être fixées à chacune de leurs extrémités sur un chariot apte à coulisser sur un support disposé sur ladite bordure transversale supérieure, et les branches du demi-parallélogramme tournées vers le chariot de poussée peuvent être fixées à chacune de leurs extrémités sur un chariot apte à coulisser sur le chariot de poussée, les chariots coulissants associés à la bordure transversale supérieure et ceux associés au chariot de poussée étant montés pour permettre le rapprochement simultané de toute les branches du châssis à ciseaux en vue du déploiement de la bâche, ainsi que leur écartement simultané en vue du repliement de la bâche le long de la bordure transversale supérieure.

La commande du déploiement et du rapprochement des branches du châssis à ciseaux peut être réalisée par un système à vérins, tel que, par exemple, un système à vérins hydrauliques, un système à vérins électriques ou un système à vérins pneumatiques.

Sur chaque chariot coulissant associé à la bordure transversale supérieure peut être monté un vérin dudit système à vérins.

Le chariot de poussée peut comporter, au voisinage d'au moins l'une de ses extrémités, une roue apte à rouler sur la bordure longitudinale supérieure correspondante de la benne.

Une rainure longitudinale peut être pratiquée au voisinage de la bordure longitudinale supérieure de la benne opposée à la paroi latérale basculante, et le chariot de poussée peut alors comporter, de façon correspondante, une roue apte à coulisser dans ladite rainure.

Pour mieux illustrer l'objet de la présente invention, on va en décrire ci-après, à titre indicatif et non limitatif, deux modes de réalisation particulier avec référence au dessin annexé.

Sur ce dessin :
[Fig. 1] est une vue en perspective d'un dispositif de bâchage pour benne conforme à un premier mode de réalisation de la présente invention, celui-ci étant représenté en position déployée, son chariot de poussée se trouvant au premier plan, à droite si l'on regarde la figure ;
[Fig. 2] est une vue en perspective du dispositif de bâchage pour benne de la Figure 1, toujours en position déployée mais à la différence que c'est sa casquette qui se trouve au premier plan, à droite si l'on regarde la figure ;
[Fig. 3] est, à plus grande échelle, une vue en perspective du chariot de poussée dans la position qu'il occupe sur la
Figure 2 ;

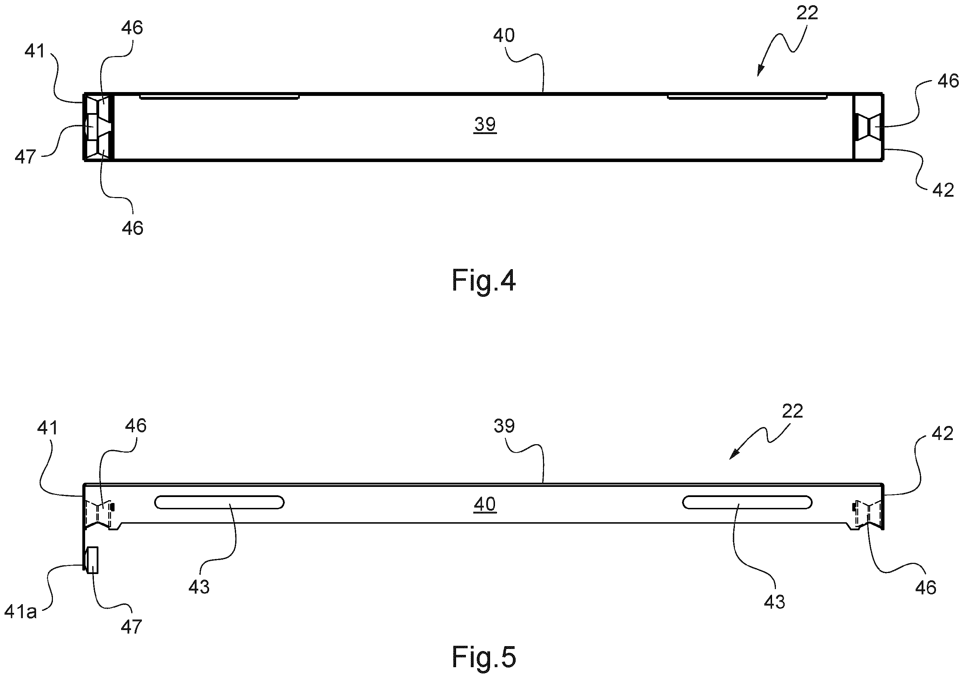

[Fig. 4] est une vue de dessous du chariot de poussée de la
Figure 3 ;

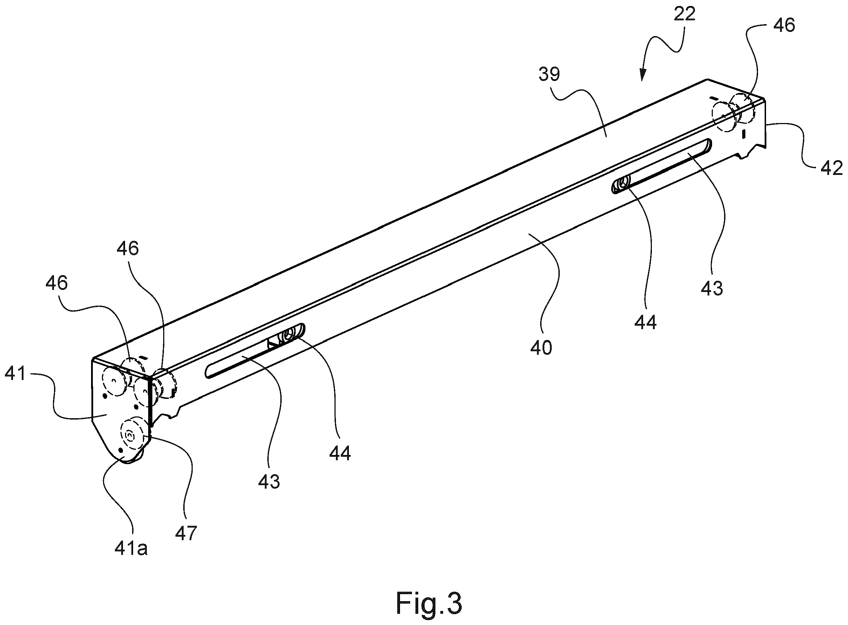

[Fig. 5] est une vue en élévation de face du chariot de poussée de la Figure 3 ;

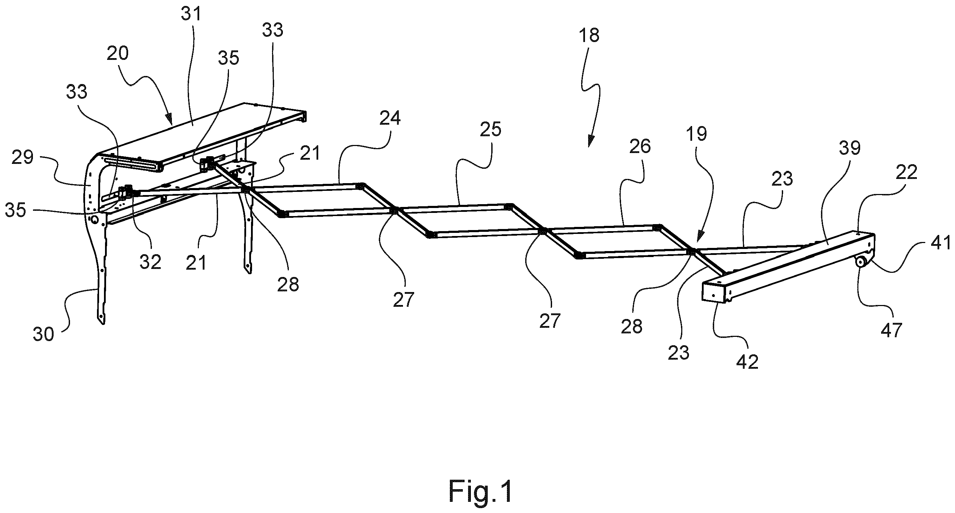

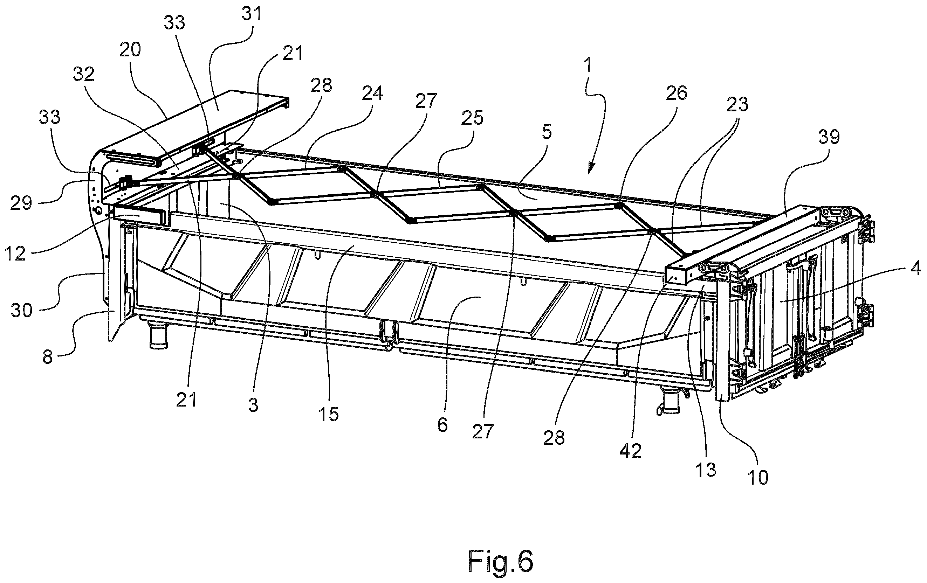

[Fig. 6] est une vue du dispositif de bâchage conforme à ce premier mode de réalisation de la présente invention, dans la position déployée qu'il occupe sur la Figure 1 et en place sur une benne dans l'état fermé de son espace de stockage ;

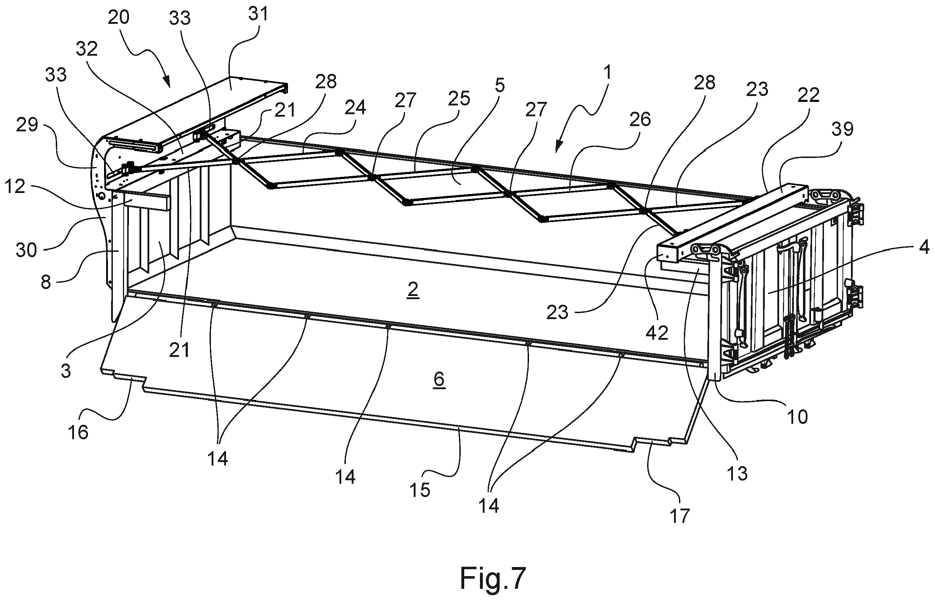

[Fig. 7] est une vue correspondant à la Figure 6 avec l'espace de stockage à l'état ouvert par repli vers le bas d'une ridelle longitudinale de la benne ;

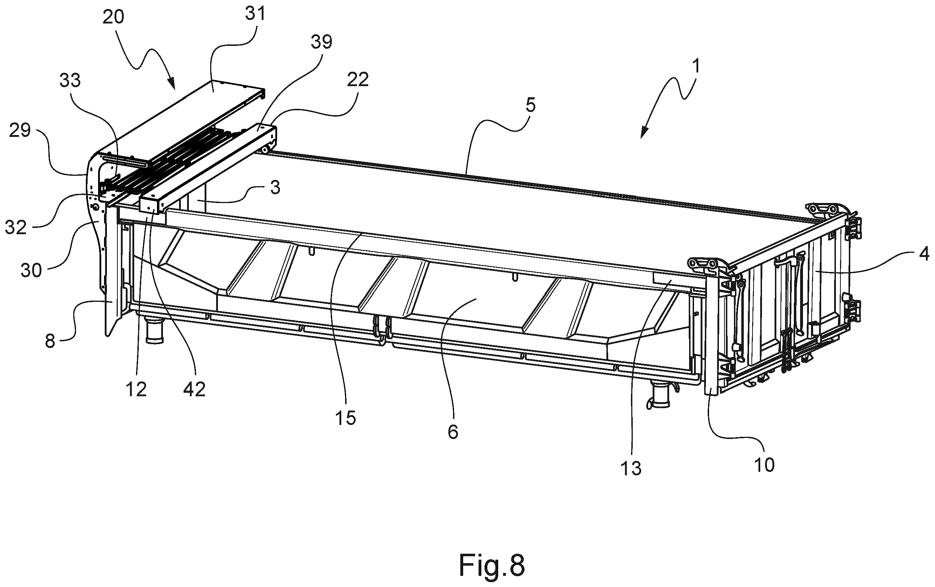

[Fig. 8] est une vue correspondant à la Figure 6 avec le dispositif de bâchage dans sa position repliée ;

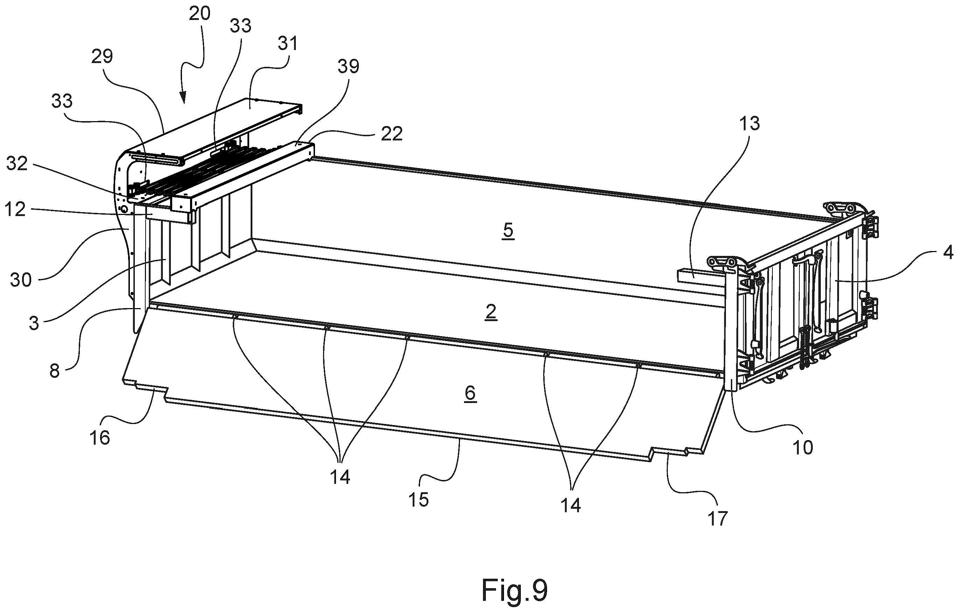

[Fig. 9] est une vue correspondant à la Figure 7 avec le dispositif de bâchage dans sa position repliée ;

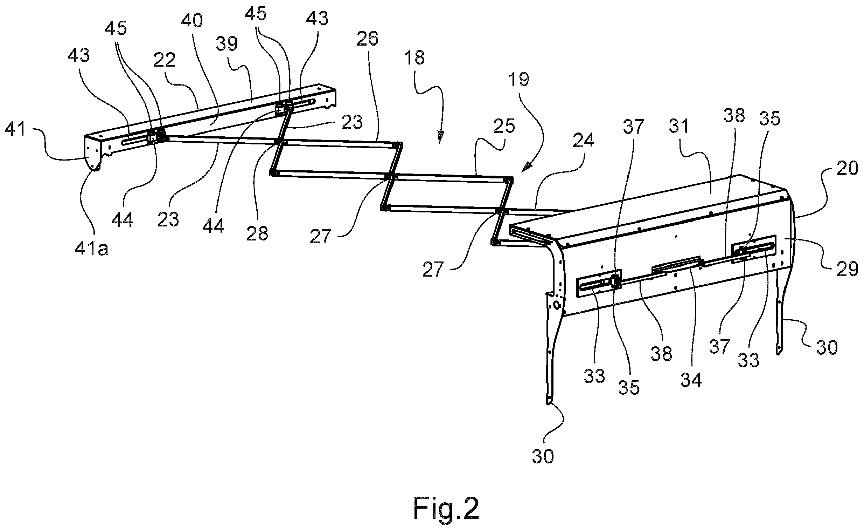

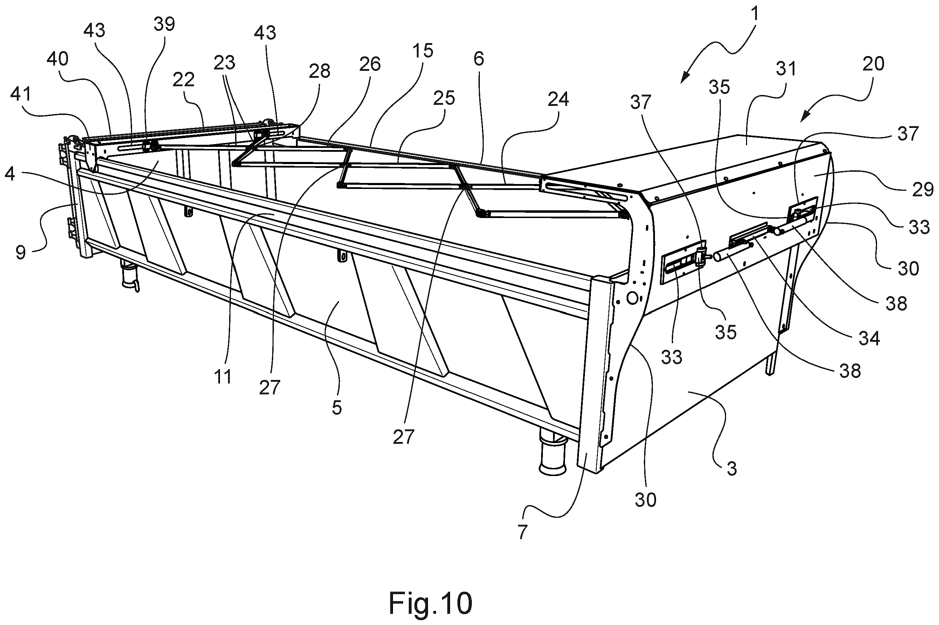

[Fig. 10] est une vue correspondant à la Figure 1 avec le dispositif de bâchage dans la position déployée qu'il occupe sur la Figure 2 ;

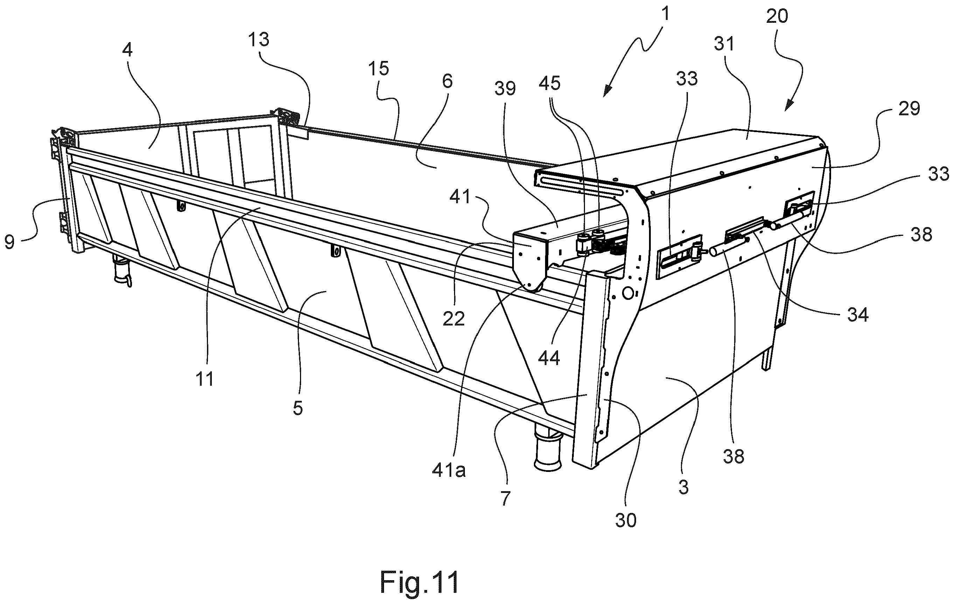

[Fig. 11] est une vue correspondant à la Figure 10 avec le dispositif de bâchage dans la position repliée ;

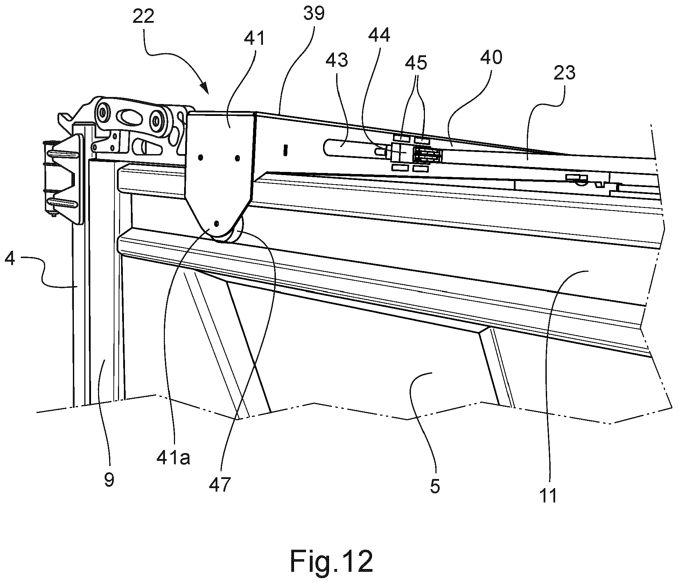

[Fig. 12] montre, à plus grande échelle, une perspective du guidage du dispositif de bâchage sur la ridelle opposée à la ridelle ouvrante dans la position déployée du dispositif de bâchage ;

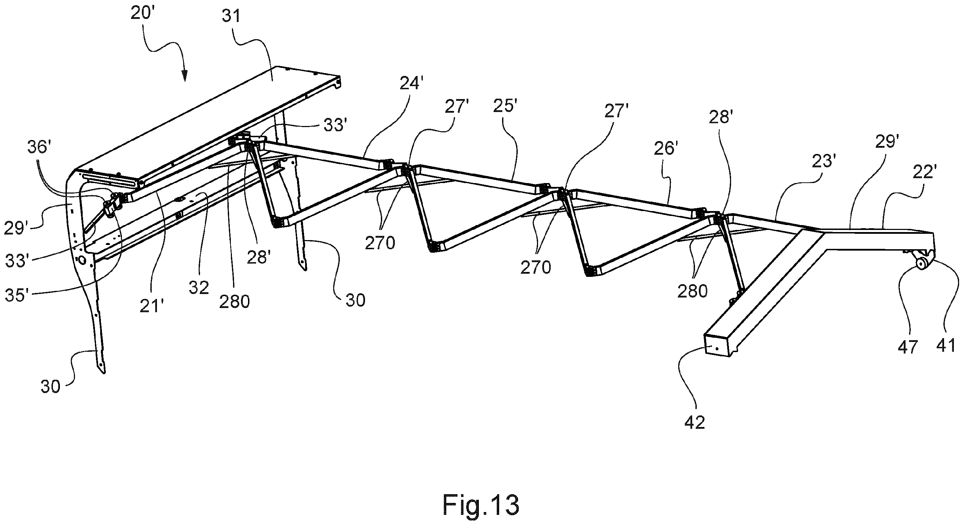

[Fig. 13] est une vue analogue à la Figure 1 d'un dispositif de bâchage conforme à un second mode de réalisation de la présente invention ;

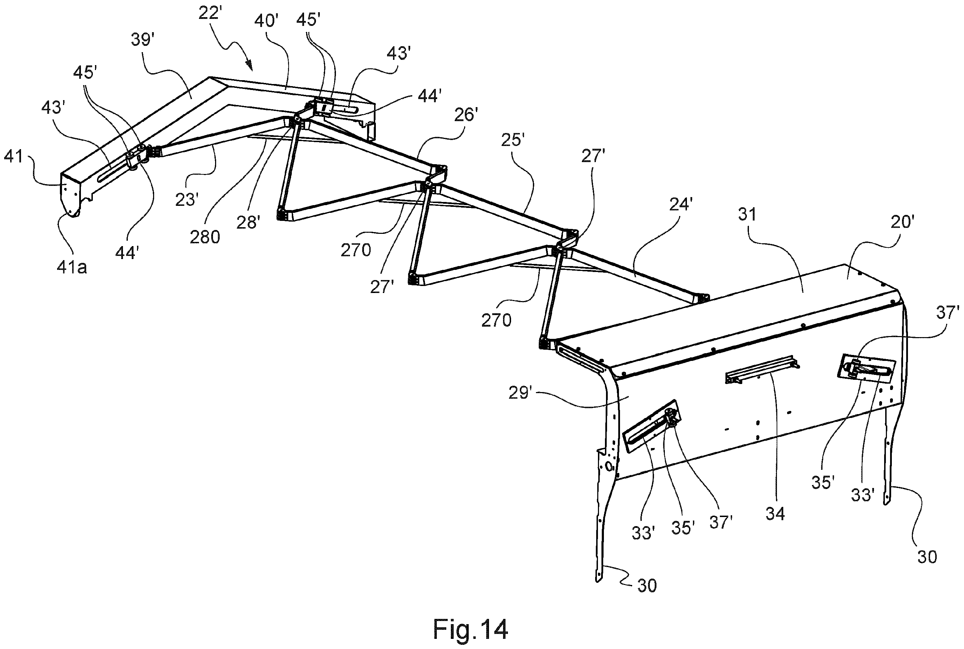

[Fig. 14] est une vue analogue à la Figure 2 du dispositif de bâchage conforme à ce second mode de réalisation ;

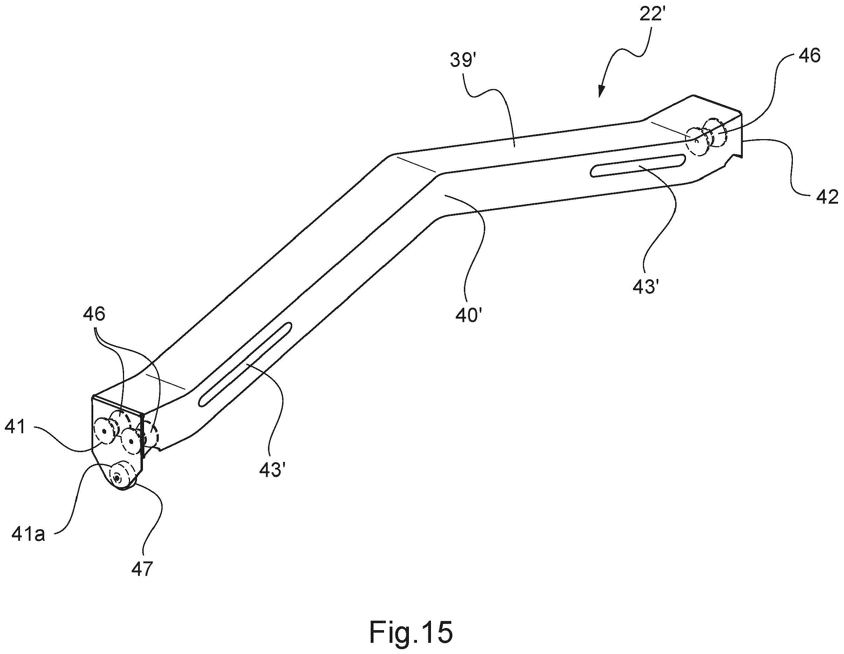

[Fig. 15] est une vue analogue à la Figure 3 du dispositif de bâchage conforme à ce second mode de réalisation ;

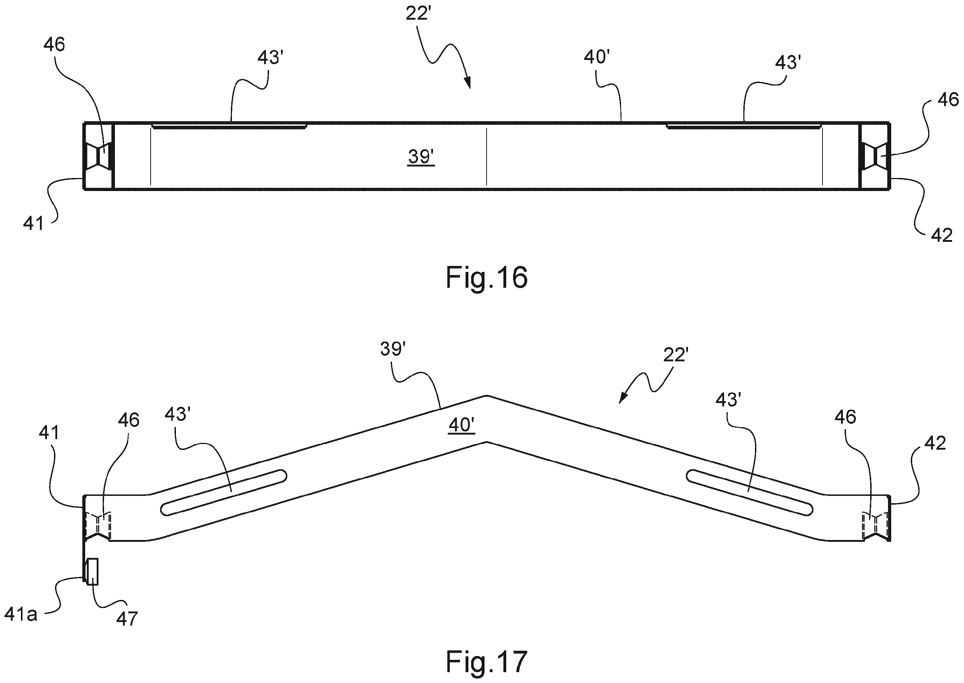

[Fig. 16] est une vue analogue à la Figure 4 du dispositif de bâchage conforme à ce second mode de réalisation ;
[Fig. 17] une vue analogue à la Figure 5 du dispositif de bâchage conforme à ce second mode de réalisation ;

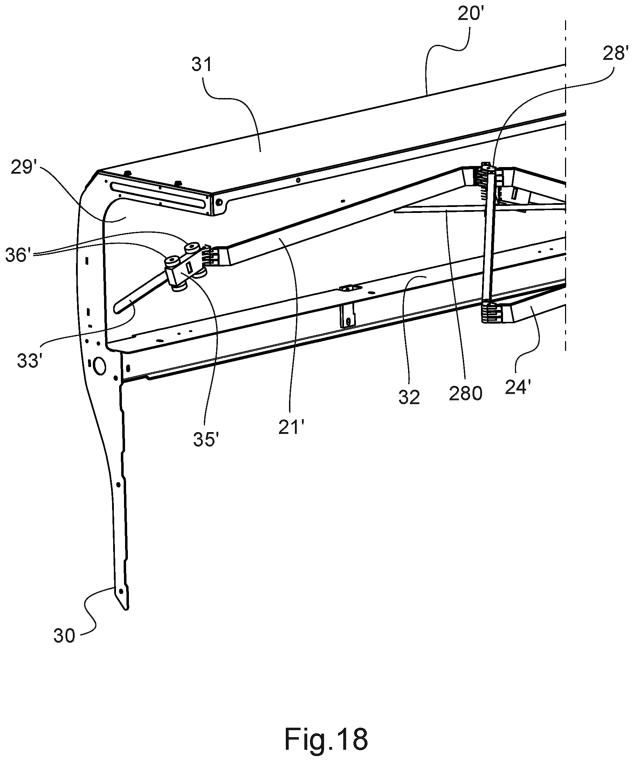

[Fig. 18] est une vue à plus grande échelle de la Figure 13 montrant la casquette du dispositif de bâchage ;

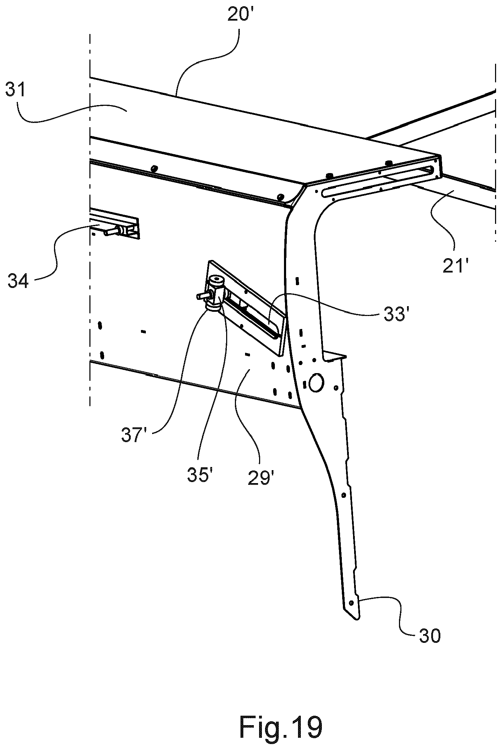

[Fig. 19] est une vue de la casquette de la Figure 18, celle-ci étant retournée pour présenter son autre face ;

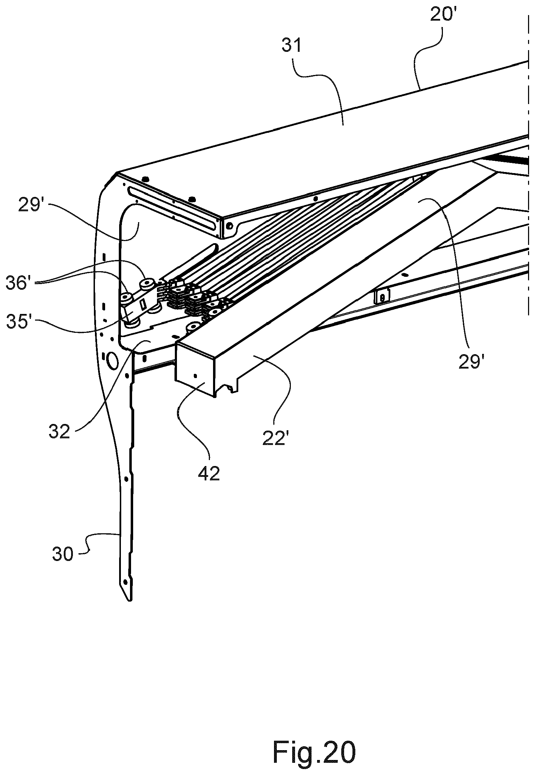

[Fig. 20] est une vue analogue à la Figure 18 avec le dispositif de bâchage dans son état replié

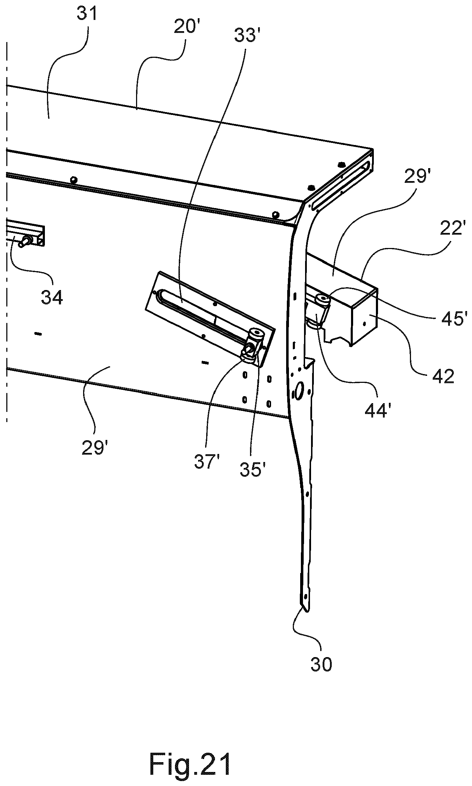

[Fig. 21] est une vue analogue à la Figure 19 avec le dispositif de bâchage dans son état replié ; et

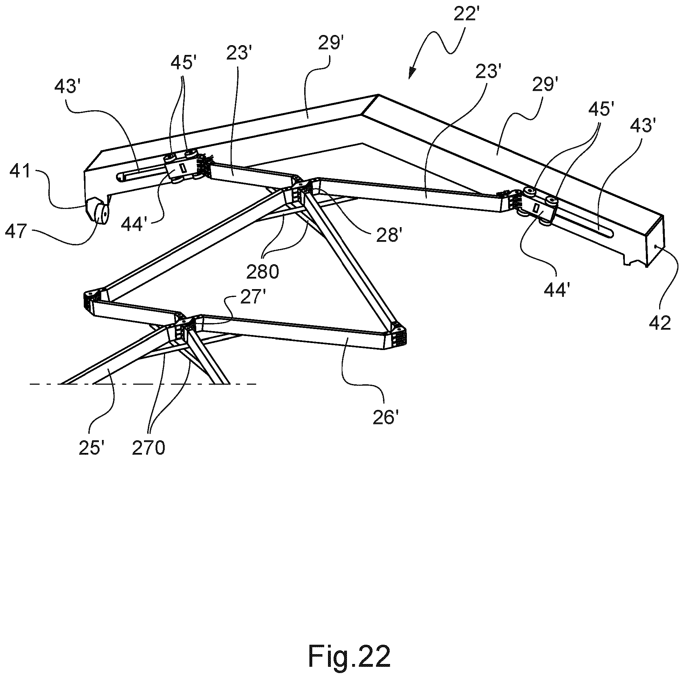

[Fig. 22] est une vue à plus grande échelle de la Figure 14 et présentant le chariot de poussée dans son état déployé.

Les termes « avant » et « arrière » et « droite » et « gauche », qui sont utilisés dans ce qui suit pour qualifier des éléments de benne et de dispositif de bâchage font référence au sens de roulement de la benne en place sur son camion porteur.

Si l'on se réfère aux Figures 6 et 7, on peut voir que l'on a représenté en perspective le caisson parallélépipédique 1 d'un semi-remorque benne dans la position de roulement de celui-ci.

Ouvert à sa partie supérieure, le caisson 1 est délimité par un fond plat rectangulaire 2 et par quatre parois latérales perpendiculaires au fond 2, à savoir une paroi transversale avant 3, une paroi transversale arrière 4, et deux parois longitudinales 5 et 6 (5 désignant la paroi longitudinale droite et 6, la paroi longitudinale gauche, pouvant aussi être appelée ridelle ouvrante).

La paroi transversale avant 3 est délimitée sur chacun de ses bords verticaux par un poteau vertical droit 7 et un poteau vertical gauche 8.

La paroi transversale arrière 4 est délimitée sur chacun de ses bords verticaux par un poteau vertical respectivement 9 et 10 (9 désignant le poteau arrière droit et 10, le poteau arrière gauche).

Comme on peut le voir sur la Figure 10, les deux poteaux 7 et 9 sont réunis par la paroi longitudinale droite 5, laquelle est fixe et présente extérieurement au voisinage de sa bordure supérieure, une gorge longitudinale 11 dont le rôle est indiqué plus loin.

Chacun des poteaux 8 et 10 comporte, à sa partie supérieure, en retour vers l'espace intérieur de la benne, une barre horizontale respectivement 12 et 13 dont le rôle est indiqué plus loin.

Les deux poteaux 7 et 9 sont réunis par la paroi longitudinale gauche 6, laquelle est articulée au fond 2 le long de sa bordure longitudinale inférieure par des charnières 14.

La paroi 6 présente, le long de sa bordure supérieure 15 et à partir de l'angle avec la bordure transversale, une échancrure respectivement 16, 17 (16 désignant l'échancrure avant et 17 désignant l'échancrure arrière) afin qu'en position fermée (Figure 8), la bordure longitudinale supérieure 15 se situe dans l'alignement avec les bordures supérieures des barres respectivement 12 et 13.

On va maintenant décrire le dispositif de bâchage 18 de l'ouverture supérieure de la benne 1 apte à déplacer une bâche B d'une position où elle est déployée pour recouvrir ladite ouverture à une position où elle est repliée à une extrémité pour découvrir cette ouverture.

Le dispositif de bâchage 18 comporte :
- une bâche B (représentée partiellement), de forme rectangulaire de dimensions permettant le recouvrement de l'ouverture supérieure de la benne 1 ;
- un châssis horizontal à ciseaux 19 apte à supporter la bâche B fixée sur celui-ci ;
- un organe avant 20 de fixation des deux branches d'extrémité avant 21 du châssis 19 ; et
- un organe arrière 22 de fixation des deux branches d'extrémité arrière 23 du châssis 19.

Le châssis horizontal à ciseaux 19 comporte une succession de trois parallélogrammes identiques 24, 25, 26, articulés en chacun de leurs sommets, avec une articulation commune 27, d'une part, entre le parallélogramme d'extrémité avant 24 et le parallélogramme central 25, et, d'autre part, entre le parallélogramme central 25 et le parallélogramme d'extrémité arrière 26.

Les articulations 28 des deux parallélogramme 24 et 26 opposées aux articulations respectives 27 se prolongent par les branches précitées respectivement 21 et 23, lesquelles représentent chacune des demi-parallélogrammes.
L'organe avant 20 se compose d'une plaque verticale 29 destinée à venir se placer transversalement pour surplomber le bord transversal avant de l'ouverture de la benne 1.

Cette plaque 29 se prolonge vers le bas le long de chacune de ses bordures latérales par une patte allongée 30 de fixation à un poteau respectif.

La plaque 29 est repliée vers l'arrière, le long de sa bordure longitudinale supérieure, par une plaque horizontale 31, dite casquette, dont le rôle est indiqué plus loin.

Le long de sa bordure longitudinale inférieure, la plaque 29 porte vers l'arrière, en saillie, une plaque horizontale 32 qui vient se situer sous la casquette 31, délimitant avec cette dernière un espace de réception de la bâche B en position pliée (Figure 8).

Dans la plaque 29, sont pratiquées deux ouvertures oblongues 33 d'axe horizontal au-dessus de sa bordure longitudinale.

Ces ouvertures 33 sont disposées chacune au voisinage d'une bordure latérale de la plaque 29. Entre les deux ouvertures 33 et sur la paroi externe (paroi avant) de la plaque 29 est appliquée une plaquette 34 dont le rôle est indiqué plus loin.

Dans chacune des ouvertures 33 est monté un chariot coulissant 35 qui, à l'arrière, est relié à la branche correspondante de l'organe avant 20 et qui porte, en saillie, un rouleau 36 d'axe vertical apte à rouler sur la paroi interne de la plaque 29 au-dessus et au-dessous de l'ouverture oblongue respective 33.

A l'avant, le chariot coulissant 35 porte en saillie, de la même façon qu'à l'arrière, un rouleau 37 d'axe vertical apte à rouler sur la paroi externe de la plaque 29 au-dessus et au-dessous de l'ouverture oblongue respective 33.

Sur la plaquette 34, sont montés les corps de deux vérins 38 aptes à déplacer chacun un chariot roulant 35 pour l'amener à coulisser dans son ouverture oblongue correspondante, les chariots 35 étant aptes à être commandés pour s'éloigner l'un de l'autre dans une position d'ouverture maximale des branches 21, repliant sur lui-même le châssis à ciseaux 19 (Figure 8), ou pour se rapprocher l'un de l'autre dans une position d'ouverture minimale des branches 21, déployant le châssis à ciseaux 19 (Figure 1 par exemple).

Si l'on se réfère maintenant aux Figures 1 à 5, on peut voir que l'organe arrière 22 de fixation des deux branches d'extrémité arrière 23 du châssis 19 consiste en un chariot de poussée comportant un corps allongé délimité par une paroi supérieure horizontale 39 de forme rectangulaire, par une paroi transversale verticale avant 40 reliée par son bord supérieur au bord arrière de la paroi 39, ainsi qu'une paroi latérale verticale droite 41 et une paroi latérale verticale gauche 42, chacune étant reliée à la fois au bord supérieur horizontal de la paroi 39 et au bord latéral vertical de la paroi 40.

Dans la paroi 40, sont formées deux ouvertures horizontales 43 de forme oblongue, dont l'emplacement et le rôle sont analogues à ceux décrits pour les ouvertures 33.

A cet effet, des chariots 44, analogues aux chariots 35, sont aptes à coulisser chacun dans une ouverture 43, chacun étant relié, à l'avant à une branche correspondante du châssis à ciseaux 19. Ce coulissement à l'arrière est, de la même façon qu'à l'avant, guidé par des rouleaux d'axe vertical 45.

Contre chacune des parois latérales 41 et 42 est monté, apte à tourner autour d'un axe horizontal, un dispositif 46 apte à rouler sur la bordure longitudinale supérieure correspondante du caisson 1, laquelle présente un profil en V inversé sur lequel a lieu le roulement du dispositif associé 46 qui possède, dans l'exemple représenté, un rouleau en forme de diabolo pour le dispositif 46 côté paroi verticale gauche 42 et deux rouleaux chacun en forme de diabolo pour le dispositif 46 côté paroi verticale droite 41.

La paroi verticale droite 41 se prolonge vers le bas par un partie triangulaire 41a dont la pointe est dirigée vers le bas. Contre cette partie 41a est fixé intérieurement un axe horizontal autour duquel est monté un rouleau tournant 47, apte à rouler dans le rail 11 (Figures 10 à 12).

Si l'on se réfère maintenant aux Figures 13 à 22, on peut voir que l'on a représenté une variante de réalisation du dispositif de bâchage dans laquelle le châssis horizontal à ciseaux 19 ainsi que l'organe arrière 22 ont été modifiés. Les éléments non modifiés par rapport au premier mode de réalisation portent les mêmes chiffres de référence, et les éléments modifiés, les mêmes chiffres de référence suivis de « ' ».

Le châssis 19' n'est plus plat mais les articulations 27 et 28 sont disposées dans un plan se situant au-dessus des autres articulations.

Des tiges de soutien 270 et 280 sont placées au-dessous des articulations respectivement 27' et 28'. Ces tiges de soutien relient entre elles des branches successives de parallélogrammes voisins afin de suivre le mouvement des articulations 27' et 28'.

Il en résulte que l'organe 22' est également modifié pour présenter une forme générale en V.

De la même manière, les ouvertures oblongues 33' et 43' ne sont plus horizontales mais sont inclinées pour être parallèles à la ligne moyenne d'inclinaison correspondante de l'organe 22'.

## Revendications

1. - Benne de transport de marchandises, de forme parallélépipédique ouverte à sa partie supérieure, comportant un fond (2) à quatre parois latérales, à savoir deux paroi latérales longitudinales (5 ; 6) si l'on considère le sens d'avance d'un camion sur lequel la benne serait placée, et deux parois latérales transversales (3 ; 4), l'une des parois longitudinales (6) étant apte à basculer autour de sa ligne de liaison avec le fond (2), pour un déversement latéral, ladite benne comportant un dispositif de bâchage (18) apte à recouvrir et à découvrir son ouverture supérieure, ledit dispositif de bâchage (18) comportant une bâche souple appliquée sur un support de bâche apte à prendre les positions de recouvrement et de découvrement en entraînant avec lui ladite bâche, **caractérisée par le fait que** le support de bâche comporte un châssis à ciseaux (19) relié à une extrémité à une bordure transversale supérieure de la benne et à l'autre extrémité à un chariot de poussée (22) monté déplaçable sur la benne en étant guidé sur la bordure longitudinale supérieure de la benne opposée à la paroi longitudinale basculante (6).

2. - Benne selon la revendication 1, **caractérisée par le fait que** le châssis à ciseaux (19) comporte une succession de parallélogrammes (24 ; 25 ; 26) articulés entre eux en un point central et se prolonge à chaque extrémité par les deux branches (21 ; 23) d'un demi-parallélogramme.

3. - Benne selon l'une des revendications 1 et 2, **caractérisée par le fait que** les branches des parallélogrammes (24 ; 25 ; 26) du châssis à ciseaux (19) sont disposées dans un même plan.

4. - Benne selon l'une des revendications 1 et 2, **caractérisée par le fait que** les points centraux d'articulation (27') du châssis à ciseaux sont surélevés par rapport aux points d'articulation latéraux, donnant au bâchage une forme générale en dôme.

5. - Benne selon la revendication 4, **caractérisée par le fait que** le chariot de poussée (22') présente une forme en V inversé pour correspondre à la forme en dôme de la bâche.

6. - Benne selon l'une des revendications 1 à 5, **caractérisée par le fait que** les branches (21) du demi-parallélogramme tournées vers la bordure transversale supérieure de la benne sont fixées à chacune de leurs extrémités sur un chariot (35) apte à coulisser sur un support disposé sur ladite bordure transversale supérieure, et les branches (23) du demi-parallélogramme tournées vers le chariot de poussée (22) sont fixées à chacune de leurs extrémités sur un chariot (44) apte à coulisser sur le chariot de poussée (22), les chariots coulissants (35) associés à la bordure transversale supérieure et ceux associés au chariot de poussée (22) étant montés pour permettre le rapprochement simultané de toute les branches du châssis à ciseaux (19) en vue du déploiement de la bâche, ainsi que leur écartement simultané en vue du repliement de la bâche le long de la bordure traversable supérieure.

7. - Benne selon l'une des revendications 1 à 6, **caractérisée par le fait que** la commande du déploiement et du rapprochement des branches du châssis à ciseaux (19) est réalisée par un système à vérins, tel que, par exemple, un système à vérins hydrauliques, un système à vérins électriques ou un système à vérins pneumatiques.

8. - Benne selon les revendications 6 et 7 prises simultanément, **caractérisée par le fait que** sur chaque chariot coulissant (35) associé à la bordure transversale supérieure est monté un vérin dudit système à vérins.

9. - Benne selon l'une des revendications 1 à 8, **caractérisée par le fait que** le chariot de poussée (19) comporte, au voisinage d'au moins l'une de ses extrémités, une roue (42 ; 46) apte à rouler sur la bordure longitudinale supérieure correspondante de la benne.

10. - Benne selon l'une des revendications 1 à 9, **caractérisée par le fait qu'**une rainure longitudinale (11) est pratiquée au voisinage de la bordure longitudinale supérieure de la benne opposée à la paroi latérale basculante (6), et que le chariot de poussée (22) comporte, de façon correspondante, une roue (41a) apte à coulisser dans ladite rainure.
